(19) Europäisches Patentamt / European Patent Office / Office européen des brevets

(11) **EP 1 940 064 A1**

(12) **EUROPEAN PATENT APPLICATION**
published in accordance with Art. 153(4) EPC

(43) Date of publication:
**02.07.2008 Bulletin 2008/27**

(51) Int Cl.:
*H04J 11/00* (2006.01)

(21) Application number: **06823423.6**

(22) Date of filing: **15.11.2006**

(86) International application number:
**PCT/JP2006/322775**

(87) International publication number:
**WO 2007/058219 (24.05.2007 Gazette 2007/21)**

(84) Designated Contracting States:
**DE FR GB**

(30) Priority: **16.11.2005 JP 2005332067**

(71) Applicant: **MATSUSHITA ELECTRIC INDUSTRIAL CO., LTD.**
**Osaka 571-8501 (JP)**

(72) Inventor: **FUJITA, Shoichi,**
**Matsushita Electric Industrial co., Ltd.**
**2-1-61, Shiromi, Chuo-ku**
**Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **MULTI CARRIER TRANSMISSION DEVICE, MULTI CARRIER RECEPTION DEVICE, AND COMMUNICATION METHOD**

(57) Provided is a multi carrier transmission device capable of compensating the delay time and the imbalance and the orthogonal difference between the in-phase component and the orthogonal component of the amplitude at a low cost without increasing the circuit size. In this device, a coordinate conversion unit (103) performs coordinate conversion of each symbol of m-series transmission signals so as to be symmetric with respect to the I-axis or the Q-axis of the I-Q plane or a line passing through the origin and having a positive 45-degree inclination with respect to the I-axis. A sub carrier arrangement unit (104) generates 2m-series parallel complex signals so that the symbols before and after the coordinate conversion with symmetry with respect to the I-axis or the Q-axis of the I-Q plane or a line passing through the origin and having a positive 45-degree inclination with respect to the I-axis are arranged on symmetric sub carries on the frequency axis with respect to a central frequency of a predetermined communication band.

FIG.8

## Description

### Technical Field

The present invention relates to a multicarrier transmitting apparatus, multicarrier receiving apparatus and communication method. More particularly, the present invention relates to a multicarrier transmitting apparatus, multicarrier receiving apparatus and communication method for compensating for the imbalance due to the delay time difference, amplitude difference and quadrature difference between the in-phase component (I component) and the quadrature component (Q component).

### Background Art

For example, in multicarrier communication using the wideband of 100 MHz as the signal band, carrying out digital quadrature detection is difficult and analogue quadrature detection is generally used. In this case, it is necessary to provide analogue low pass filters (hereinafter "LPF' s") for the I-channel and the Q-channel asadigital-to-analogue (hereinafter "D/A") post-filter and an analogue-to-digital (hereinafter "A/D") pre-filter. That is, LPF's are necessary to remove aliasing noise which is the one-second of the sampling frequency or greater and which occurs upon D/A conversion andA/D conversion. At this time, the amplitude imbalance and delay time imbalance between the I-channel and the Q-channel are generated due to differences between individual LPF's. The amplitude imbalance and delay time imbalance between the I-channel and the Q-channel cause inter-carrier interference and deteriorates performance.

With OFDM (Orthogonal Frequency Division Multiplexing), which is one of multicarrier communication, the delay difference between the I-channel and the Q-channel has a significant influence and, if the delay time difference is not kept within around the one-tenth of the sample period for the fast Fourier transform (hereinafter "FFT"), it becomes obvious that deterioration becomes more significant. However, it is very difficult for analogue LPF's to keep the delay time difference within around the one-tenth of the sample period. For this reason, a method of compensating for the amplitude imbalance and delay time imbalance between the I-channel and Q-channel is needed. Further, in the following description, one sample time or one sample period in the FFT is referred to as a "sample." Furthermore, over-sampling needs to be carried out upon A/D conversion, and so one sample in A/D conversion does not necessarily match with one sample for FFT.

Conventionally, methods of compensating for the amplitude imbalance and delay time imbalance between the I-channel and the Q-channel include using LPF's with little difference between the individual amplitude and group delay (hereinafter the "first method") or reducing the amplitude differences and group delay differences by adjusting LPF's individually. Further, conventionally, a method of canceling the delay time difference by extracting timings separately from the in-phase component and the quadrature component and carrying out A/D conversion at the respective optimum timings for the in-phase component and the quadrature component (hereinafter the "third method") (for example, Patent Document 1) is known.

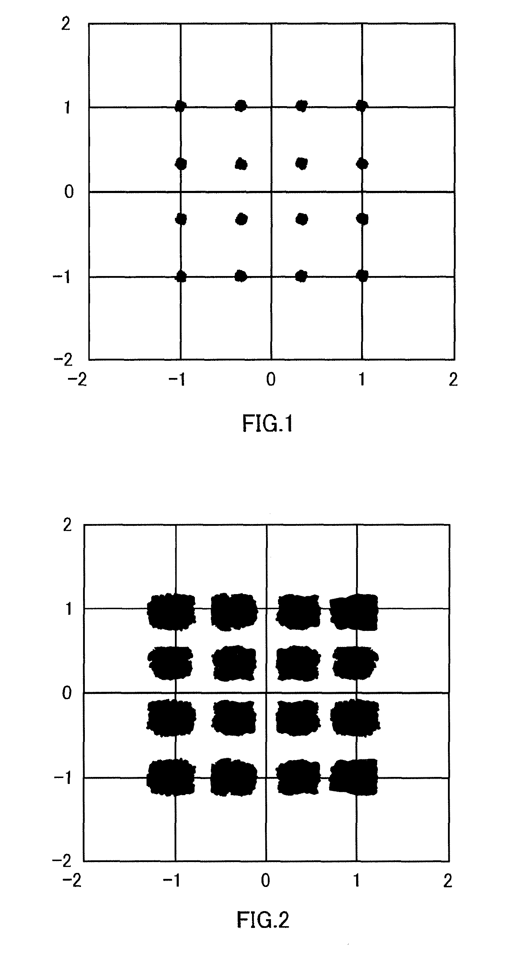

FIG.1 shows a received constellation result in case of no delay time imbalance between the I-channel and the Q-channel due to differences between individual LPF's. FIG.2 shows performance deterioration due to the delay time imbalance between the I-channel and the Q-channel which is generated by differences between individual LPF's. FIG. 2 shows that the delay time difference of the one-eighth of a sample is generated between the I-channel and the Q-channel.

For multicarrier such as OFDM, the influence of the delay time difference is significant and a small difference of one sample time or less causes significant deterioration because even a baseband signal has subcarriers and the delay time difference cannot be ignored with respect to the subcarrier period. Accordingly, a subcarrier of a higher frequency has a greater influence and, for a modulated signal in IF/RF band of the baseband signal, a subcarrier spaced apart from the center of the signal band receives a more significant influence of the delay time difference. Further, the element sensitivity of an analogue LPF becomes higher in the vicinity of cutoff, that is, the element sensitivity of an analogue LPF becomes higher near the pass band and variation is greater, and so it is difficult to avoid deterioration.

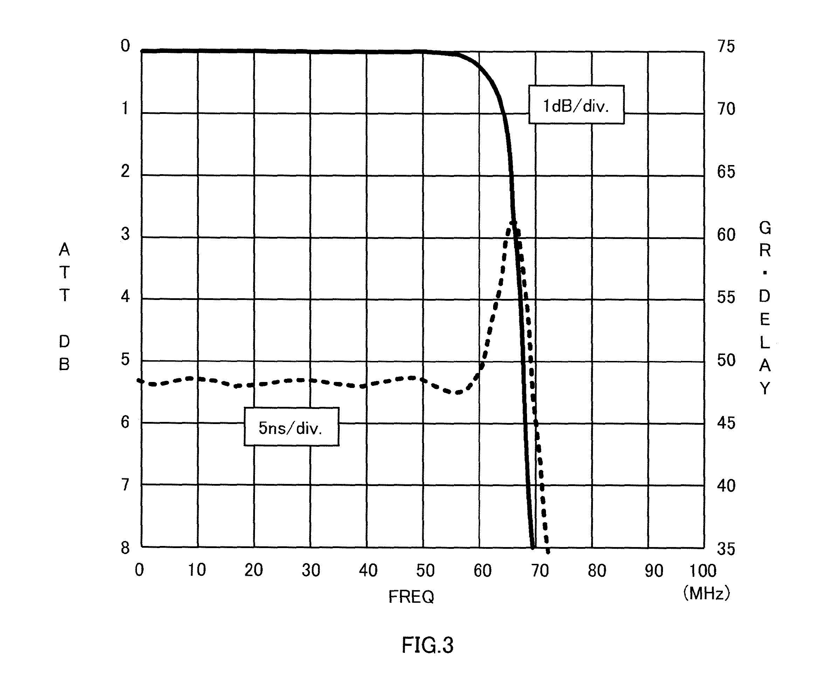

As shown in FIG.2, the delay time difference of one-eighth of a sample breaks the orthogonality between subcarriers and the constellation significantly deteriorates. When the signal band is 100 MHz (the baseband signal is 50 MHz), the number of subcarriers is 384 and the number of FFT points is 512, the sampling clock is around 100MHz×512/384=133 MHz and one sample period is 7.5 ns. Therefore, the one-eighth of a sample is 940 ps. On the other hand, the group delay time of an LPF of 50 MHz band is usually on the order of several 10 ns. For example, as shown in FIG.3, if the group delay time of the LPF is 48 ns and, when LPF's are used on the transmitting side and receiving side, the group delay time is 48x2=96 ns. Therefore, to keep the delay difference within the one-eighth of a sample = 940 ps, only about 1 % variation, that is, the individual difference of only about 1 %, can be allowed.

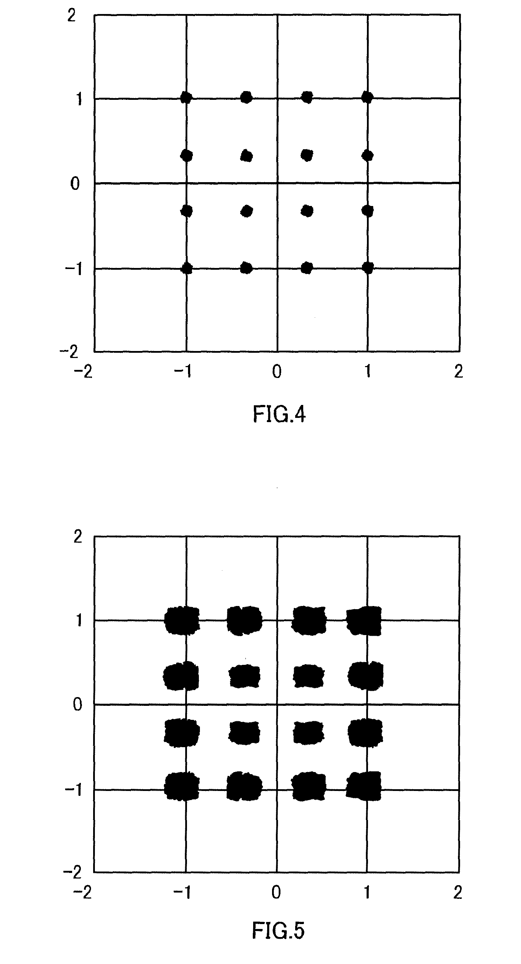

FIG.4 shows a received constellation result in case of no amplitude imbalance, which occurs due to differences between individual LPF's, between the in-phase component and the quadrature component. FIG.5 shows performance deterioration due to the amplitude imbalance, which occurs due to differences between individual LPF's, between the in-phase component and the quadrature component. FIG.5 shows a case where 1 dB amplitude difference is generated between the in-phase component and the quadrature component . As shown in FIG. 5, the amplitude imbalance causes an interference between subcarriers, which deteriorates performance. The amplitude difference has less influence compared to the delay time difference. For example, to keep the pass band amplitude difference of an LPF within 1 dB is easier than to keep the group delay difference within 1 %.

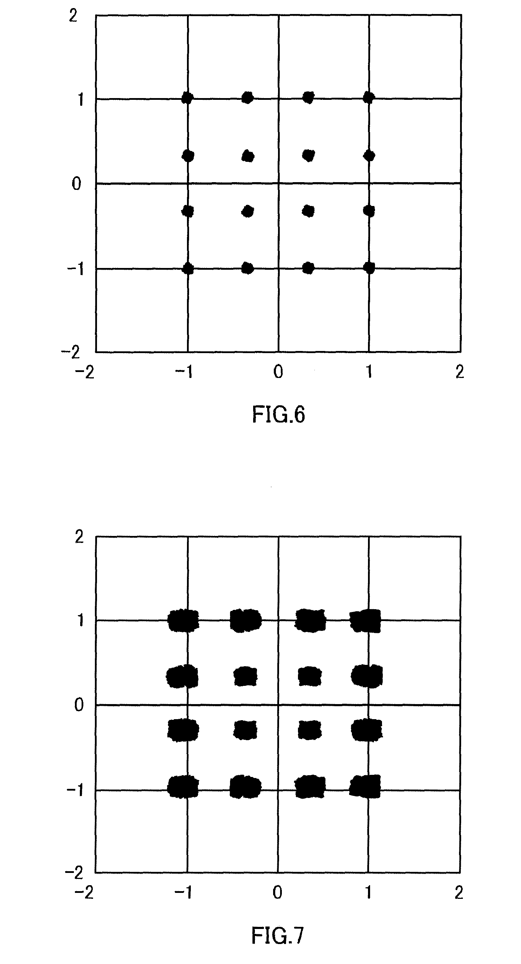

FIG.6 shows a received constellation result in case of no quadrature difference between the in-phase component and the quadrature component generated by differences between individual LPF's. FIG.7 shows performance deterioration due to the quadrature difference, which occurs due to the differences between individual LPF' s, between the in-phase component and the quadrature component. FIG.7 shows a case where a quadrature difference of five degrees is generated between the in-phase component and the quadrature component. Although a π/2 phase shifter is required in analogue quadrature detection, it is difficult to realize an accurate phase shift over a wideband. Therefore, as shown in FIG.7, occurrence of the imbalance between the I-channel and the Q-channel due to the quadrature difference cannot be avoided. The imbalance between the I-channel and the Q-channel accompanying the quadrature difference occurs due to the interference between subcarriers in the relationship of the symmetrical position with respect to the center frequency of the OFDM signal as the symmetry axis, and subcarriers other than subcarriers in the relationship of the symmetrical 1 position do not cause this interference. Then, conventionally, a technique of canceling the interference caused by the imbalance due to the quadrature difference between the I-channel and the Q-channel by making time domain spreading codes for subcarriers in the relationship of the symmetrical position orthogonal from each other, is known (for example, Non-Patent Document 1).

Next, the delay time difference, amplitude difference and quadrature difference will be described. First, the OFDM signal is assumed as a complex baseband signal of center frequency = 0. The number of IFFT points and the number of FFT points are N (even number) and the primary modulated symbols of subcarriers #0 to #N-1 are AK (k=0 to N-1). Subcarrier #0 is the direct current component, subcarriers #1 to #N/2 are the positive frequency components, and subcarriers #N/2+1 to #N-1 are the negative frequency components, and these subcarriers are arranged in the frequency domain in order from lower frequencies to higher frequencies of #N/2+1, ..., #N-1, #0, #1, ..., and #N/2 . Further, AK may include a null symbol (i.e. null subcarrier).

In an ideal condition with no performance deterioration, primary modulated symbol Ak can be obtained by performing an FFT of a received signal. At this time, according to FFT characteristics, Ak can be separated to component Xk obtained from the real number portion of the FFT input and component Yk obtained from the imaginary number portion. Xk and Yk are represented by equation 1 and equation 2, respectively.

[1]

$$X_k = \frac{1}{2}\left(A_k + A^*{}_{N-k}\right) \quad \text{... (Equation 1)}$$

where A* is the complex conjugate of A. $A_N = A_0$.
[2]

$$Y_k = \frac{1}{2}\left(A_k - A^*{}_{N-k}\right) \quad \text{... (Equation 2)}$$

where A* is the complex conjugate of A. $A_N = A_0$.
First, a case is assumed where there is a delay time difference. According to the FFT transition rule, equation 3 holds.
[ 3 ]

$$Fourier\{f(t-a)\} = e^{-j\omega \cdot a} F(\omega) \quad \text{...} \quad (Equation\ 3)$$

According to equation 3, the delay time appears as phase rotation in proportion to the frequency in the frequency domain. Then, for ease of processing in this equation, a case is assumed where the I-channel is proceeded by $\Delta t$, the Q-channel is delayed by $\Delta t$ and there is the delay time difference of $2\Delta t$ between the I-channel and the Q-channel. If the frequency domain signal of the I-channel including the delay time is X' k and the frequency domain signal of the Q-channel is Y'k, these are represented by equation 4 and equation 5.
[ 4 ]

$$X'_k = X_k \cdot e^{j\omega_k \Delta t} = \frac{1}{2}\left(A_k + A^*_{N-k}\right) \cdot e^{j\omega_k \Delta t} \quad \text{...} \quad (Equation\ 4)$$

where $\omega_k$ is the angular frequency of the k-th subcarrier.
[ 5 ]

$$Y'_k = Y_k \cdot e^{-j\omega_k \Delta t} = \frac{1}{2}\left(A_k - A^*_{N-k}\right) \cdot e^{-j\omega_k \Delta t} \quad \text{...} \quad (Equation\ 5)$$

where $\omega_k$ is the angular frequency of the k-th subcarrier.
Next, the amplitude difference will be described. If the amplitude of the I-channel is $(1+\alpha)$ and the amplitude of the Q-channel is $(1+\alpha)$, the frequency domain signals including the amplitude difference in addition to the delay difference are represented by equation 6 and equation 7.
[ 6 ]

$$X''_k = X'_k \cdot (1+\alpha) = \frac{1}{2}\left(A_k + A^*_{N-k}\right) \cdot (1+\alpha) \cdot e^{j\omega_k \Delta t}$$

$$\text{...} \quad (Equation\ 6)$$

[7]

$$Y_k^{''} = Y_k^{'} \cdot (1-\alpha) = \frac{1}{2}\left(A_k - A^*{}_{N-k}\right) \cdot (1-\alpha) \cdot e^{-j\omega_k \Delta t}$$

… (Equation 7)

Further, the quadrature difference is added. Then, for ease of processing in these equations, the phase of the I-channel is proceeded by $\Delta\theta$ (rad), the phase of the Q-channel is delayed by $\Delta\theta$ (rad) and the quadrature difference is $-2\Delta\theta$ (rad), that is, the angle of the I-axis with respect to the Q-axis is $\pi/2-2\Delta\theta$. Frequency domain signals of the I-channel and the Q-channel including the quadrature differences are represented by equation 8 and equation 9.
[8]

$$X_k^{'''} = X_k^{''} \cdot e^{j\Delta\theta} = \frac{1}{2}\left(A_k + A^*{}_{N-k}\right) \cdot (1+\alpha) \cdot e^{j(\omega_k \Delta t + \Delta\theta)}$$

… (Equation 8)

[9]

$$Y_k^{'''} = Y_k^{''} \cdot e^{-j\Delta\theta} = \frac{1}{2}\left(A_k - A^*{}_{N-k}\right) \cdot (1-\alpha) \cdot e^{-j(\omega_k \Delta t + \Delta\theta)}$$   … (Equation 9)

According to these equations, if the received symbols including the delay time difference and the amplitude difference are A''' K, A''' k are represented by equation 10.
[10]

$$A_k''' = X_k''' + Y_k'''$$

$$= \frac{1}{2} A_k \{(1+\alpha) \cdot e^{j(\omega_k \Delta t + \Delta \theta)} + (1-\alpha) \cdot e^{-j(\omega_k \Delta t + \Delta \theta)}\}$$

$$+ \frac{1}{2} A_{N-k}^* \{(1+\alpha) \cdot e^{j(\omega_k \Delta t + \Delta \theta)} - (1-\alpha) \cdot e^{-j(\omega_k \Delta t + \Delta \theta)}\}$$

$$= \{Cos(\omega_k \Delta t + \Delta \theta) + j \cdot \alpha \cdot Sin(\omega_k \Delta t + \Delta \theta)\} \cdot A_k$$

$$+ \{j \cdot Sin(\omega_k \Delta t + \Delta \theta) + \alpha \cdot Cos(\omega_k \Delta t + \Delta \theta)\} \cdot A_{N-k}^*$$

$$\ldots \text{(Equation 10)}$$

That is, the demodulated symbol of subcarrier #k receive interferences of transmission symbol #k and transmission symbol #N-k, that is, interferences of transmission symbols in the symmetrical position with the center frequency as the axis, and subcarrier signals other than these two symbols do not cause the interference.

Patent Document 1: Japanese Patent Application Laid-Open No.2001-24722

Non-Patent Document 1: "Elimination of Interference due to IQ Imbalance for OFCDM Direct Conversion Receiver," RCS2003-145 (2003-10), The Institute of Electronics, Information and Communication Engineers.

Disclosure of Invention

Problems to be Solved by the Invention

However, in conventional apparatuses, with respect to the amplitude imbalance and the delay time imbalance between the I-channel and the Q-channel, the first method and the second method demand the restrictive requirement for LPF's and are costly, and so there is a problem that a lower cost cannot be realized. Further, the third method enables compensation for a delay time shorter than one sample period, but requires two timing extraction circuits, and so there is a problem that the circuit scale increases. Furthermore, there is a problem that the third method is not able to compensate for the amplitude imbalance. Still further, in conventional apparatuses, to compensate for the imbalance accompanying the quadrature difference between the I-channel and the Q-channel, time domain spreading needs to be carried out. Therefore, with a scheme of carrying out spreading only in the frequency domain or a repetition scheme of transmitting a duplicated data symbol using a plurality of subcarriers, synthesizing the same data symbols included in a radio signal received by a wireless communication apparatus on the receiving side and obtaining the diversity gain, there is a problem that the imbalance accompanying the quadrature difference between the I-channel and the Q-channel cannot be compensated for.

It is therefore an object of the present invention to provide a multicarrier transmitting apparatus, multicarrier receiving apparatus and communication method that are able to compensate for a delay time imbalance and an amplitude imbalance at a lower cost without increasing the circuit scale and compensate for the quadrature difference according to either the scheme carrying out spreading only in the frequency domain or the repetition scheme.

Means for Solving the Problem

The multicarrier transmitting apparatus according to the present invention employs a configuration including:

a coordinate conversion section that carries out a coordinate conversion of symbols on an I-Q plane symmetrically with respect to an I axis, a Q axis or a symmetry axis which has an inclination of positive forty five degrees with respect to the I axis and which passes an origin; an arranging section that generates a transmission signal where the symbols are arranged such that symbols before and after the coordinate conversion, which are in a relationship of symmetrical coordinate positions with respect to the I axis, the Q axis or the symmetry axis which has an inclination of positive forty five degrees with respect to the I axis and which passes an origin, are arranged on subcarriers that are symmetrical in the frequency domain with respect to a center frequency of a predetermined communication band; an inverse fast Fourier transform section that carries out an inverse fast Fourier transform of the transmission signal generated at the arranging section; a band limiting section that carries out a band limitation of the transmission signal subjected to the inverse fast Fourier transform at the inverse fast Fourier transform section; and a transmitting section that transmits the transmission signal subjected to the band limitation.

The multicarrier receiving apparatus according to the present invention employs a configuration including: a receiving section that carries out a coordinate conversion of symbols on an I-Q plane symmetrically with respect to an I axis, a Q axis or a symmetry axis which has an inclination of positive forty five degrees with respect to the I axis and which passes an origin and receives a received signal where symbols before and after the coordinate conversion, which are in a relationship of symmetrical coordinate positions with respect to the I axis, the Q axis or the symmetry axis which has an inclination of positive forty five degrees with respect to the I axis and which passes an origin, are arranged on subcarriers that are symmetrical in the frequency domain with respect to the center frequency of a predetermined communication band; a quadrature detection section that carries out a quadrature detection of the received signal and outputs an I component and a Q component; a band limiting section that separately carries out a band limitation of the I component and the Q component; a frequency domain to time domain conversion section that converts the I component and the Q component subjected to the band limitation from the frequency domain to the time domain and outputs the I component and the Q component as received signals of a plurality of sequences; a coordinate conversion section that converts again the symbols of the received signals of the plurality of sequences outputted from the frequency to time domain converting section and subjected to the coordinate conversion, into a state before the coordinate conversion on the I-Q plane; and a combining section that combines symbols which are converted again and symbols which are not converted again.

The communication method according to the present invention includes: carrying out a coordinate conversion of symbols on an I-Q plane symmetrically with respect to an I axis, a Q axis or a symmetry axis which has an inclination of positive forty five degrees with respect to the I axis and which passes an origin; generating a transmission signal where the symbols are arranged such that symbols before and after the coordinate conversion, which are in a relationship of symmetrical coordinate positions with respect to the I axis, the Q axis or the symmetry axis which has an inclination of positive forty five degrees with respect to the I axis and which passes an origin, are arranged on subcarriers that are symmetrical in the frequency domain with respect to a center frequency of a predetermined communication band; carrying out an inverse fast Fourier transform of the generated transmission signal; carrying out a band limitation of the transmission signal subjected to the inverse fast Fourier transform; at a multicarrier transmitting apparatus, transmitting the transmission signal subjected to a band limitation; at a multicarrier receiving apparatus, receiving the transmission signal transmitted from the multicarrier transmitting apparatus; carrying out a quadrature detection of the received signal and outputting an I component and a Q component; carrying out separately a band limitation of the I component and the Q component; converting the I component and the Q component subjected to the band limitation, from the frequency domain to the time domain and outputting the I component and the Q component as received signals of a plurality of sequences; converting again the symbols of the received signals of the plurality of sequences outputted and subjected to the coordinate conversion, into a state before the coordinate conversion on the I-Q plane; and combining the symbols which are converted again and symbols which are not converted again.

Advantageous Effect of the Invention

The present invention is able to compensate for a delay time imbalance and an amplitude imbalance at a lower cost without increasing the circuit scale and compensate for the quadrature difference according to either a scheme of carrying out spreading only in the frequency domain or a repetition scheme.

Brief Description of Drawings

FIG.1 shows a conventional constellation;
FIG.2 shows a conventional constellation;
FIG.3 shows a conventional constellation;

FIG.4 shows a conventional constellation;

FIG.5 shows a conventional constellation;

FIG.6 shows a conventional constellation;

FIG.7 shows a conventional constellation;

FIG.8 is a block diagram showing a configuration of a multicarrier transmitting apparatus according to Embodiment 1 of the present invention;

FIG.9 is a block diagram showing a configuration of a multicarrier receiving apparatus according to Embodiment 1 of the present invention;

FIG.10 shows a coordinate conversion according to Embodiment 1 of the present invention;

FIG.11 shows a coordinate conversion according to Embodiment 1 of the present invention;

FIG.12 shows a coordinate conversion according to Embodiment 1 of the present invention;

FIG.13 shows subcarriers according to Embodiment 1 of the present invention;

FIG.14 shows a condition where an interference occurs according to Embodiment 1 of the present invention;

FIG.15 shows a condition where an interference occurs according to Embodiment 1 of the present invention;

FIG.16 shows a condition where an interference occurs according to Embodiment 1 of the present invention;

FIG.17 shows a condition where an interference occurs according to Embodiment 1 of the present invention;

FIG.18 shows a condition where an interference occurs according to Embodiment 1 of the present invention;

FIG. 19 shows a constellation according to Embodiment 1 of the present invention;

FIG.20 shows a constellation according to Embodiment 1 of the present invention;

FIG. 21 shows a constellation according to Embodiment 1 of the present invention;

FIG . 22 shows a constellation according to Embodiment 1 of the present invention;

FIG. 23 shows a constellation according to Embodiment 1 of the present invention;

FIG. 24 shows a constellation according to Embodiment 1 of the present invention;

FIG.25 shows a constellation according to Embodiment 1 of the present invention;

FIG. 26 shows a constellation according to Embodiment 1 of the present invention;

FIG.27 is a block diagram showing a configuration of the multicarrier transmitting apparatus according to Embodiment 2 of the present invention; and

FIG.28 is a block diagram showing a configuration of the multicarrier receiving apparatus according to Embodiment 2 of the present invention.

Best Mode for Carrying Out the Invention

Hereinafter, embodiments of the present invention will be described in details with reference to the accompanying drawings.

(Embodiment 1)

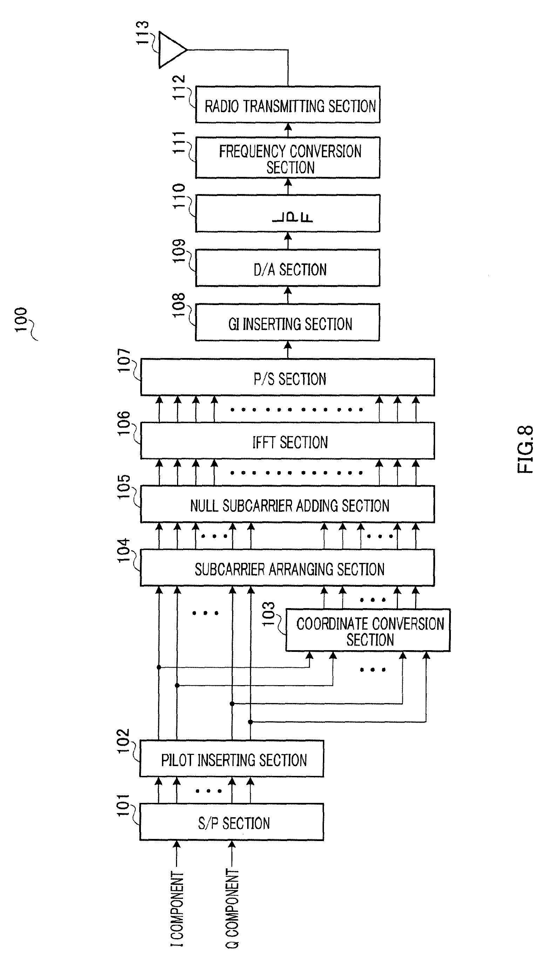

FIG.8 is a block diagram showing a configuration of multicarrier transmitting apparatus 100 according to Embodiment 1 of the present invention.

Serial-to-parallel (hereinafter "S/P") section 101 converts a complex baseband signal of the I-component signal and the Q-component signal subjected to primary modulation according to a modulation scheme such as QPSK or 16 QAM at a modulator (not shown), into parallel signals of m sequences (m is a natural number of two or greater). Then, S/P section 101 outputs transmission signals of m sequences to pilot inserting section 102. Further, signals inputted to S/P section 101 are not limited to complex baseband signals, and may be spread signals, repeated signals or signals subjected to code multiplexing.

Pilot inserting section 102 inserts known signals for channel estimation to the transmission signals of m sequences inputted from S/P section 101, by time multiplexing. Then, pilot inserting section 102 outputs the transmission signals of m sequences, into which the known signals for channel estimation are inserted, to coordinate conversion section 103 and subcarrier arranging section 104.

Coordinate conversion section 103 carries out a coordinate conversion such that the symbols of transmission signals of m sequences inputted from pilot inserting section 102 are symmetrical with respect to a predetermined axis of symmetry on the I-Q plane, and outputs the symbols to subcarrier arranging section 104. Further, a method of carrying out a coordinate conversion will be described later.

Subcarrier arranging section 104, which is an arranging means, arranges the transmission signals of m sequences inputted from pilot inserting section 102 and the transmission signals of m sequences inputted from coordinate conversion section 103, and generates parallel complex signals of two m sequences. To be more specific, subcarrier arranging section 104 generates parallel complex signals of two m sequences such that symbols before a coordinate conversion and symbols after a coordinate conversion inputted from pilot inserting section 102 and coordinate converting section 103, which are in the relationship of the symmetrical coordinate positions with respect to the symmetry axis on the I-Q plane used in the coordinate conversion, are arranged on subcarriers that are symmetrical in the frequency domain with respect to the center frequency of the predetermined communication band. Then, subcarrier arranging section 104 outputs the generated parallel complex signals of two m sequences to subcarrier adding section 105.

Null subcarrier adding section 105 adds null data (zero data) to the parallel complex signals of two m sequences inputted from subcarrier arranging section 104 and generates parallel complex signals of N (N>2m) sequences. Then, null subcarrier adding section 105 outputs the generated parallel complex signals of N sequences to IFFT section 106. If null data is added, null subcarrier adding section 105 inserts data "0" into subcarriers assigned to the guard band. For example, if the number of IFFT points is 512, 512 subcarriers can be generated, but, in this case, data is inserted into the closer 384 subcarriers on both sides of 0 Hz including the negative frequency and data "0" is inserted into the further 128 subcarriers including the subcarrier of 0 Hz and the rest of subcarriers. By this means, data is inserted into subcarriers of lower frequency bands and so it becomes easy to remove aliasing noise.

IFFT section 106 carries out IFFT operation of N points with respect to the parallel complex signals of N sequences inputted from null subcarrier adding section 105. Then, IFFT section 106 outputs transmission signals after IFFT operation to parallel-to-serial (hereinafter "P/S") section 107.

P/S section 107 converts multicarrier signals inputted from IFFT section 106 into a time sequence signal and outputs the time sequence signal to guard interval (hereinafter "GI") inserting section 108.

GI inserting section 108 inserts a GI into the time sequence signal inputted from P/S section 107 and outputs the signal to D/A section 109.

D/A section 109 converts the time sequence signal inputted from GI inserting section 108 from a digital signal into an analogue signal and outputs the analogue signal to LPF section 110.

LPF 110, which is a band limiting means, removes the aliasing component generated accompanying D/A conversion from the analogue signal inputted from D/A section 109. Then, LPF 110 outputs the analogue signal, from which the aliasing component is removed, to frequency conversion section 111.

Frequency conversion section 111 up-converts the analogue signal inputted from LPF 110 from the baseband frequency to IF frequency (i.e. intermediate frequency) and outputs the signal to radio transmitting section 112.

Radio transmitting section 112 up-converts the analogue signal of the IF frequency inputted from frequency converting section 111 from the IF frequency to the radio frequency, amplifies the signal and outputs the signal to antenna 113.

Antenna 113 transmits the analogue signal of the radio frequency inputted from radio transmitting section 112 as a multicarrier signal.

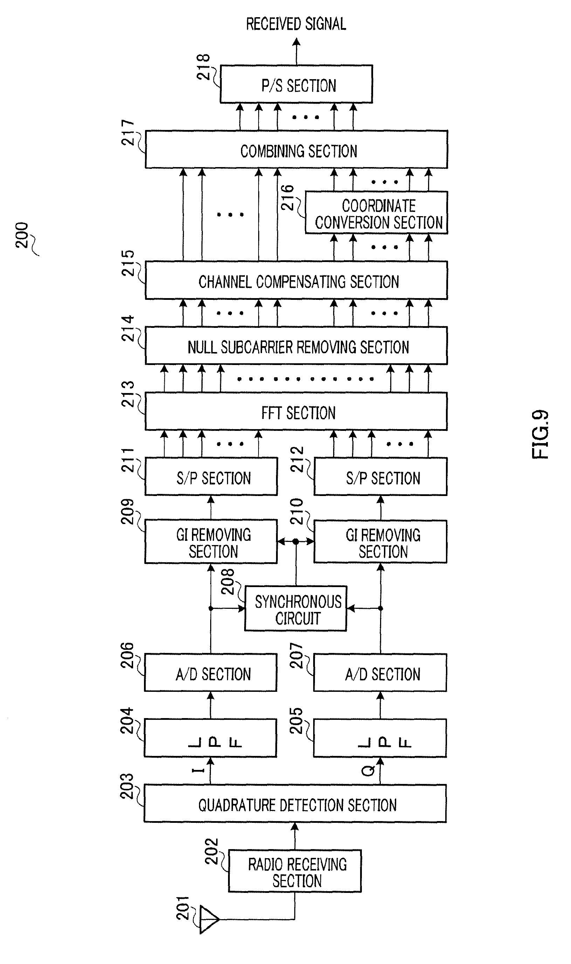

Next, a configuration of multicarrier receiving apparatus 200 will be described using FIG.9. FIG.9 is a configuration of multicarrier receiving apparatus 200.

Antenna 201 receives the multicarrier signal transmitted from multicarrier transmitting apparatus 100 and outputs the signal to radio receiving section 202.

Radio receiving section 202 down-converts the received signal inputted from antenna 201 from the radio frequency to the IF frequency and outputs the signal to quadrature detection section 203.

Quadrature detection section 203 carries out analogue quadrature detection of the received signal of the IF frequency inputted from radio receiving section 202, and outputs the I-component to LPF 204 and the Q-component to LPF 205. Upon quadrature detection, the quadrature difference is generated due to phase imperfection in a n/2 phase shift circuit.

LPF 204, which is a band limiting means, carries out a band limitation by passing only low frequency bands of the I-component inputted from quadrature detection section 203 and outputs the baseband in-phase component subjected to a band limitation, to A/D section 206.

LPF 205, which is a band limiting means, carries out a band limitation by passing only low frequency bands of the Q-component inputted from quadrature detection section 203, and outputs the baseband quadrature component subjected to a band limitation, to A/D section 207. At this time, the amplitude difference and delay time difference between the I-component and the Q-component occur due to differences between individual LPF 204 and LPF 205.

A/D section 206 converts the I-component inputted from LPF 204 from an analogue signal to a digital signal, and outputs the signal to synchronous circuit 208 and GI inserting section 209.

A/D section 207 converts the Q-component inputted from LPF 205 from an analogue signal to a digital signal and outputs the signal to synchronous circuit 208 and GI removing section 210.

Synchronous circuit 208 generates timing signals showing FFT starting positions from the I-component and the Q-component according to GI correlation operation. Then, synchronous circuit 208 outputs the generated timing signals to GI removing section 209 and GI removing section 210.

GI removing section 209 removes a GI from the I-component inputted from A/D section 206 based on the timing signal from synchronous circuit 208, and outputs the I-component to S/P section 211.

GI removing section 210 removes a GI from the Q-component inputted from A/D section 207 based on the timing signal from synchronous circuit 208 and outputs the Q-component to S/P section 212.

S/P section 211 converts the I-component inputted from GI removing section 209 into parallel signals of N sequences in OFDM symbol units. Then, S/P section 211 outputs the converted parallel signals of N sequences to FFT section 213.

S/P section 212 converts the Q-component inputted from GI removing section 210 into parallel signals of N sequences in OFDM symbol units. Then, S/P section 212 outputs the converted parallel signals of N sequences to FFT section 213.

FFT section 213, which is a frequency domain to time domain conversion means, carries out FFT operation of N points with respect to the parallel signals of N sequences inputted from S/P section 211 and S/P section 212. FFT section 213 converts the parallel signals of N sequences from the frequency domain to the time domain by performing an FFT. Then, FFT section 213 outputs parallel signals after FFT operation, which are complex numbers, to null subcarrier removing section 214.

Null subcarrier removing section 214 removes null subcarrier signals from the parallel signals inputted from FFT section 213 and outputs parallel signals of two m sequences of only effective subcarriers to channel compensating section 215.

Channel compensating section 215 estimates channel characteristics of each subcarrier using known signals for channel estimation included in the parallel signals inputted from null subcarrier removing section 214 and carries out compensation. Then, out of the compensated parallel signals of two m sequences, channel compensating section 215 outputs parallel signals of m sequences not subjected to a coordinate conversion in multicarrier transmitting apparatus 100, to combining section 217 and outputs parallel signals of m sequences subjected to a coordinate conversion in multicarrier transmitting apparatus 100, to coordinate conversion section 216.

Coordinate conversion section 216 carries out a coordinate conversion again such that symbols of the parallel signals of m sequences inputted from channel compensating section 215 return to the state before a coordinate conversion in coordinate conversion section 103. Then, coordinate conversion section 216 outputs the parallel signals of m sequences subjected to a coordinate conversion, to combining section 217.

Combining section 217 adds the parallel signals of m sequences inputted from channel compensating section 215 and the parallel signals of m sequences inputted from coordinated conversion section 216. At this time, combining section 217 adds symbols of symmetrical subcarriers in the frequency domain with respect to the center frequency of the predetermined communication band Then, combining section 217 outputs the added parallel signals of m sequences to P/S section 218.

P/S section 218 converts the parallel signals of two m sequences inputted from combining section 217 into a serial signal and outputs the serial signal as the received signal. The received signal outputted from P/S section 218 is complex baseband signal of the I-component and the Q-component subjected to a primary modulation.

Next, operations of multicarrier transmitting apparatus 100 and multicarrier receiving apparatus 200 will be described.

First, in multicarrier transmitting apparatus 100, S/P section 101 converts the complex baseband signal of the I-component and the Q-component into parallel signals of m sequences (m is a natural number of two or greater), and pilot inserting section 102 inserts known signals for channel estimation into the parallel signals of m sequences. Next, in multicarrier transmitting apparatus 100, coordinate conversion section 103 carries out a coordinate conversion of symbols on the predetermined symmetry axis on the I-Q plane.

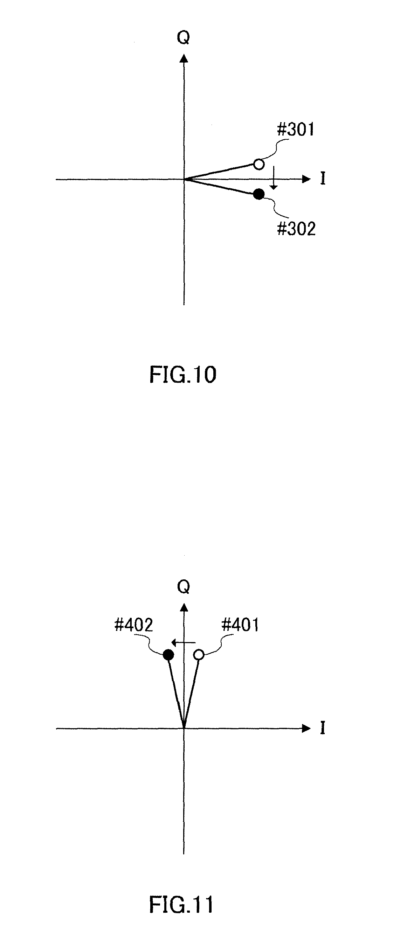

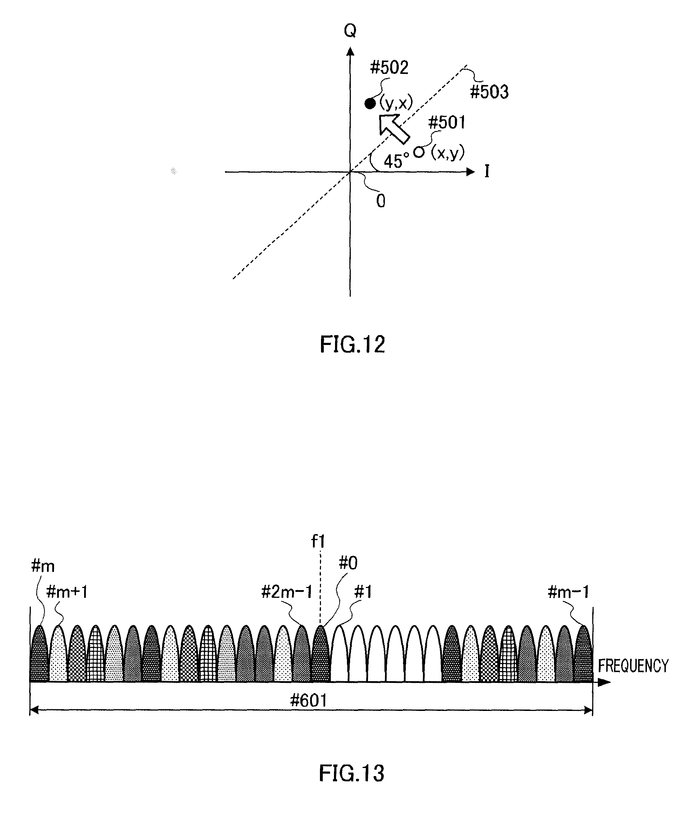

The method of carrying out a coordinate conversion selects one of three methods of: selecting the I axis as the symmetry axis and carrying out a coordinate conversion of symbols symmetrically with respect to the I axis on the I-Q plane; selecting the Q axis as the symmetry axis and carrying out a coordinate conversion of symbols symmetrically with respect to the Q axis on the I-Q plane; and selecting a symmetry axis which has an inclination of positive forty five degrees with respect to the I axis and which passes the origin, and carrying out coordinate conversion of symbols symmetrically with respect to the selected symmetry axis. With the method of carrying out a coordinate conversion of the symbols on the I-Q plane symmetrically with respect to the I axis, the coordinate conversion of symbol #301 is carried out symmetrically with respect to the I axis as shown in FIG.10, and so symbol #301 becomes symbol #302 after the coordinate conversion. Further, according to the method of carrying out a coordinate conversion of symbols on the I-Q plane symmetrically with respect to the Q axis, the coordinate conversion of symbol #401 is carried out symmetrically with respect to the Q axis as shown in FIG.11, and so symbol #401 becomes symbol #402 after the coordinate conversion. Further, the method of carrying out a coordinate conversion of symbols symmetrically with respect to the symmetry axis which has an inclination of positive forty five degrees with respect to the I axis and which passes the origin, is equivalent to replacing the I-component of the symbols with the Q-component on the I-Q plane. Therefore, by replacing the I-component of symbol #501 with the Q-component as shown in FIG.12, symbol #501 becomes symbol #502 after the coordinate conversion. Here, as shown in FIG. 12, symmetry axis #503 is a straight line which has an inclination of positive forty five degrees with respect to the I axis and which passes the origin O, and coordinate positions of symbol #501 and symbol #502 are symmetrical with respect to symmetry axis #503.

Next, in multicarrier transmitting apparatus 100, if the number of IFFT points is N, null subcarrier adding section 105 adds N-2m items of null data and generates parallel signals of N sequences. Next, in multicarrier transmitting apparatus 100, IFFT section 106 performs an IFFT on the parallel signals of N sequences.

By performing an IFFT, IFFT section 106 generates multicarrier signals formed with subcarriers #m, #m+1, ..., #2m-1, #0, #1, ..., and #m-1 arranged in order from lower frequencies to higher frequencies in communication band #601. In case of FIG.13, the center of subcarrier #0 is center frequency f1. That is, symmetrical subcarriers in the frequency domain with respect to center frequency f1 are, for example, subcarrier #1, subcarrier 2m-1, subcarrier #2, subcarrier 2m-2, subcarrier m-1 and subcarrier m+1. Consequently, symbols before a coordinate conversion and symbols after a coordinate conversion are arranged on these symmetrical subcarriers. Further, null signals are usually arranged on subcarrier #0 and subcarrier #m.

Then, if the method of carrying out a coordinate conversion of symbols on the I-Q plane symmetrically with respect to the I axis is used, by performing an IFFT, for example, subcarrier #301 is arranged upon subcarrier #1 and symbol #302 is arranged on subcarrier #2m-1. Further, if the method of carrying out a coordinate conversion of symbols on the I-Q plane symmetrically with respect to the I axis is used, the positive frequency component is the complex conjugate of the negative frequency component, and so IFFT section 106 outputs the real number portion and does not output the imaginary number portion.

Further, if the method of carrying out a coordinate conversion of symbols on the I-Q plane symmetrically with respect to the Q axis is used, by performing an IFFT, for example, symbol #401 is arranged on subcarrier #1 and symbol #402 is arranged on subcarrier #2m-1. Further, if the method of carrying out a coordinate conversion of symbols on the I-Q plane symmetrically with respect to the Q axis, the positive frequency component is the inverted complex conjugate of the negative frequency component, and so IFFT section 106 outputs only the imaginary number portion and does not output the real number portion.

Further, according to the method of carrying out a coordinate conversion of symbols symmetrically with respect to the symmetry axis which has an inclination of positive forty five degrees with respect to the I axis and which passes the origin, by performing an IFFT, for example, symbol #501 is arranged on subcarrier #1 and symbol #502 is arranged on subcarrier #2m-1 . In this case, the real number portion and the imaginary number portion of a signal after an IFFT become equal.

Next, in multicarrier transmitting apparatus 100, P/S section 107 converts signals of N sequences into a time sequence signal, GI inserting section 108 inserts a GI into the time sequence signal and D/A section 109 converts the signal from a digital signal to an analogue signal. Next, in multicarrier transmitting apparatus 100, LPF 110 removes the aliasing component. At this time, only one of the real number portion and the imaginary number portion needs to be outputted or either one of portions needs to be used because the real number portion and the imaginary number portion become equal, and, consequently, one LPF 100 is enough.

Next, in multicarrier transmitting apparatus 100, frequency converting section 111 up-converts the analogue signal from the baseband frequency to the IF frequency (i.e. intermediate frequency), and radio transmitting section 112 up-converts the analogue signal of the IF frequency from the IF frequency to the radio frequency, amplifies the analogue signal and transmits the signal to antenna 113.

Next, in multicarrier receiving apparatus 200 that receives a multicarrier signal transmitted from multicarrier transmitting apparatus 100, radio receiving section 202 down-converts the multicarrier signal from the radio frequency to the IF frequency and quadrature detection section 203 carries out quadrature detection of the received signal of the IF frequency and outputs the I-component and the Q-component.

Next, in multicarrier receiving apparatus 200, LPF 204 carries out a band limitation by passing only lower frequency bands of the I-component and LPF 205 carries out a band limitation by passing lower frequency bands of the Q-components. Next, in multicarrier receiving apparatus 200, A/D section 206 converts an analogue signal of the I-component into a digital signal, A/D section 207 converts an analogue signal of the Q-component into a digital signal, synchronous circuit 208 generates timing signals showing FFT start positions according to GI correlation operation, GI removing section 209 removes the GI from the I-component based on the timing signal and GI removing section 210 removes the GI from the Q-component based on the timing signal.

Next, in multicarrier receiving apparatus 200, S/P section 211 converts the I-component into parallel signals of N sequences in OFDM symbol units and S/P section 212 converts the Q-component into parallel signals of N sequences in OFDM symbol units.

Next, in multicarrier receiving apparatus 200, FFT section 213 carries out an FFT operation of N points, null subcarrier removing section 214 removes null subcarrier signals to obtain parallel signals of two m sequences of only effective subcarriers and channel estimating section 215 estimates channel characteristics of each subcarrier using known signals for channel estimation and carry out compensation.

Next, in multicarrier receiving apparatus 200, coordinate conversion section 216 carries out again a coordinate conversion of symbols of parallel signals of m sequences on the I-Q plane into the state before the coordinate conversion. That is, with the method of carrying out a coordinate conversion of symbols on the I-Q plane symmetrically with respect to the I axis, coordinate conversion section 216 carries out again the coordinate conversion of symbol #302 of FIG.10 symmetrically with respect to the I axis, and so symbol #302 becomes symbol #301 after the coordinate conversion. Further, with the method of carrying out a coordinate conversion of symbols on the I-Q plane symmetrically with respect to the Q axis, by carrying out a coordinate conversion of symbol #402 of FIG.11 symmetrically with respect to the Q axis, symbol #402 becomes symbol #401 after the coordinate conversion. Further, according to the method of carrying out a coordinate conversion of symbols with respect to the symmetry axis which has an inclination of positive forty five degrees and which passes the origin, by replacing the I-component of symbol #502 of FIG.12 with the Q-component, symbol #502 becomes symbol #501 after the coordinate conversion.

Next, in multicarrier receiving apparatus 200, combining section 217 adds parallel signals of m sequences not subjected to the coordinate conversion and parallel signals of m sequences subjected to the coordinate conversion again. At this time, combining section 217 adds symbols of symmetrical subcarriers in the frequency domain with respect to the center frequency of a predetermined communication band.

Next, in cases where the above three coordinate conversion methods are used, a method of compensating for the delay time difference, amplitude difference and quadrature difference will be described in details using equations.

First, a case will be described where the coordinate conversion is carried out symmetrically with respect to the Q axis. Multicarrier transmitting apparatus 100 transmits signals that have the relationship of equation 11.

[11]

$$A_{N-k} = A_k^* \qquad (k = 0 \sim N/2 - 1) \text{ ... (Equation 11)}$$

Signals that have the relationship of equation 11 and that are transmitted from multicarrier transmitting apparatus 100 are represented by equation 12 for received symbol received symbol $A'''_k$ including the delay time difference, amplitude difference and quadrature difference in multicarrier receiving apparatus 200 and are represented by equation 13 for received symbol $A'''_{N-k}$ including the delay time difference, amplitude difference and quadrature difference.

[12]

$$A_k''' = \frac{1}{2} A_k \{(1+\alpha) \cdot e^{j(\omega_k \Delta t + \Delta \theta)} + (1-\alpha) \cdot e^{-j(\omega_k \Delta t + \Delta \theta)}\}$$

$$+ \frac{1}{2} A_k \{(1+\alpha) \cdot e^{j(\omega_k \Delta t + \Delta \theta)} - (1-\alpha) \cdot e^{-j(\omega_k \Delta t + \Delta \theta)}\}$$

$$= A_k \{(1+\alpha) \cdot e^{j\omega_k \Delta t} \cdot e^{j\Delta \theta}\} \text{ ... (Equation 12)}$$

[13]

$$A_{N-k}^{'''} = \frac{1}{2} A_k^* \{(1+\alpha) \cdot e^{j(\omega_{N-k}\Delta t + \Delta\theta)} + (1-\alpha) \cdot e^{-j(\omega_{N-k}\Delta t + \Delta\theta)}\}$$

$$+ \frac{1}{2} A_k^* \{(1+\alpha) \cdot e^{j(\omega_{N-k}\Delta t + \Delta\theta)} - (1-\alpha) \cdot e^{-j(\omega_{N-k}\Delta t + \Delta\theta)}\}$$

$$= A_k^* \{(1+\alpha) \cdot e^{j\omega_{N-k}\Delta t} \cdot e^{j\Delta\theta}\} \quad \text{... (Equation 13)}$$

Here, $e^{j\omega k\Delta t}$ and $e^{j\omega_{N-k}\Delta t}$ are fixed phase rotation determined on a per k basis (on a per subcarrier basis), and $(1+\alpha)$ and $e^{j\Delta\theta}$ are fixed values. Consequently, these fixed coefficients are compensated for by channel estimation on a per subcarrier basis using the pilot symbol (i.e. known signal) and $A_k$ and $A_k^*$ are obtained as demodulated symbols.
Then, $A_{N-k}'''$ subjected to the coordinate conversion at coordinate conversion section 216 is represented by equation 14.
[14]

$$(A_{N-k}^{'''})^* = (A_k^*)^* = A_k \quad \text{... (Equation 14)}$$

If $A_k'''$ is combined with equation 14 at combining section 217, equation 15 can be obtained.
[15]

$$A_k^{'''} + (A_{N-k}^{'''})^* = 2 \cdot A_k \quad \text{... (Equation 15)}$$

Next, a case will be described where the coordinate conversion is carried out symmetrically with respect to the I axis. Multicarrier transmitting apparatus 100 transmits signals that have the relationship of equation 16.
[16]

$$A_{N-k} = -A_k^* \qquad (k = 0 \sim N/2 - 1) \quad \text{... (Equation 16)}$$

Signals that have the relationship of equation 16 that are transmitted from multicarrier transmitting apparatus 100 are represented by equation 17 for received symbol received symbol $A_k'''$ including the delay time difference, amplitude difference and quadrature difference in multicarrier receiving apparatus 200 and are represented by equation 18 for received symbol $A_{N-k}''''$ including the delay time difference, amplitude difference and quadrature difference.
[17]

$$A_k''' = \frac{1}{2}A_k\left\{(1+\alpha)\cdot e^{j(\omega_k\Delta t+\Delta\theta)} + (1-\alpha)\cdot e^{-j(\omega_k\Delta t+\Delta\theta)}\right\}$$

$$-\frac{1}{2}A_k\left\{(1+\alpha)\cdot e^{j(\omega_k\Delta t+\Delta\theta)} - (1-\alpha)\cdot e^{-j(\omega_k\Delta t+\Delta\theta)}\right\}$$

$$= A_k\left\{(1-\alpha)\cdot e^{-j\omega_k\Delta t}\cdot e^{-j\Delta\theta}\right\} \quad \dots \quad (\text{Equation } 17)$$

[18]

$$A_{N-k}''' = -\frac{1}{2}A_k^*\left\{(1+\alpha)\cdot e^{j(\omega_{N-k}\Delta t+\Delta\theta)} + (1-\alpha)\cdot e^{-j(\omega_{N-k}\Delta t+\Delta\theta)}\right\}$$

$$+\frac{1}{2}A_k^*\left\{(1+\alpha)\cdot e^{j(\omega_{N-k}\Delta t+\Delta\theta)} - (1-\alpha)\cdot e^{-j(\omega_{N-k}\Delta t+\Delta\theta)}\right\}$$

$$= -A_k^*\left\{(1-\alpha)\cdot e^{-j\omega_{N-k}\Delta t}\cdot e^{-j\Delta\theta}\right\} \quad \dots \quad (\text{Equation } 18)$$

Here, $e^{-j\omega k\Delta t}$ and $e^{-j\omega_{N-k}\Delta t}$ are fixed phase rotation determined on a per k basis (on a per subcarrier basis), and $(1-\alpha)$ and $e^{-j\Delta\theta}$ are fixed values. Consequently, these fixed coefficients are compensated for by channel estimation on a per subcarrier basis using the pilot symbol (i.e. known symbol), and $A_k$ and $-A_k^*$ can be obtained as demodulated symbols. A''' $_{N-k}$ subjected to the coordinate conversion at coordinate conversion section 216 is represented by equation 19.
[19]

$$-\left(A_{N-k}'''\right)^* = -\left(-A_k^*\right)^* = A_k \quad \dots \quad (\text{Equation } 19)$$

If A''' $_k$ is combined with equation 19 at combining section 217, equation 20 can be obtained.
[20]

$$A_k^{'''} - (A_{N-k}^{'''})^* = 2 \cdot A_k \quad \text{... (Equation 20)}$$

Next, a case will be described where a coordinate conversion of symbols is carried out symmetrically with respect to the symmetry axis which has an inclination of positive forty five degrees with respect to the I axis and which passes the origin. If equation 21 holds, multicarrier transmitting apparatus 100 transmits signals that have the relationship of equation 22.
[21]

$$A_k = (I_k + j \cdot Q_k) \quad \text{... (Equation 21)}$$

[22]

$$A_{N-k} = (Q_k + j \cdot I_k) \qquad (k = 0 \sim N/2 - 1) \quad \text{... (Equation 22)}$$

In this case, equation 23 and equation 24 hold.
[23]

$$A_k^{'''} = \{Cos(\omega_k \Delta t + \Delta\theta) + j \cdot \alpha \cdot Sin(\omega_k \Delta t + \Delta\theta)\} \cdot A_k$$

$$+ \{j \cdot Sin(\omega_k \Delta t + \Delta\theta) + \alpha \cdot Cos(\omega_k \Delta t + \Delta\theta)\} \cdot (Q_k - j \cdot I_k)$$

$$= \{Cos(\omega_k \Delta t + \Delta\theta) + j \cdot \alpha \cdot Sin(\omega_k \Delta t + \Delta\theta)\} \cdot A_k$$

$$+ \{Sin(\omega_k \Delta t + \Delta\theta) - j \cdot \alpha \cdot Cos(\omega_k \Delta t + \Delta\theta)\} \cdot (I_k + j \cdot Q_k)$$

$$= A_k [Cos(\omega_k \Delta t + \Delta\theta) + Sin(\omega_k \Delta t + \Delta\theta)$$

$$+ j \cdot \alpha \cdot \{Sin(\omega_k \Delta t + \Delta\theta) - Cos(\omega_k \Delta t + \Delta\theta)\}] \quad \text{... (Equation 23)}$$

[24]

$$A_{N-k}^{'''} = \{Cos(\omega_{N-k}\Delta t + \Delta\theta) + j \cdot \alpha \cdot Sin(\omega_{N-k}\Delta t + \Delta\theta)\} \cdot (Q_k + j \cdot I_k)$$
$$+ \{j \cdot Sin(\omega_{N-k}\Delta t + \Delta\theta) + \alpha \cdot Cos(\omega_{N-k}\Delta t + \Delta\theta)\} \cdot (I_k - j \cdot Q_k)$$
$$= \{Cos(\omega_{N-k}\Delta t + \Delta\theta) + j \cdot \alpha \cdot Sin(\omega_{N-k}\Delta t + \Delta\theta)\} \cdot (Q_k + j \cdot I_k)$$
$$+ \{Sin(\omega_{N-k}\Delta t + \Delta\theta) - j \cdot \alpha \cdot Cos(\omega_{N-k}\Delta t + \Delta\theta)\} \cdot (Q_k + j \cdot I_k)$$
$$= (Q_k + j \cdot I_k) \cdot [Cos(\omega_{N-k}\Delta t + \Delta\theta) + Sin(\omega_{N-k}\Delta t + \Delta\theta)$$
$$+ j \cdot \alpha \cdot \{Sin(\omega_{N-k}\Delta t + \Delta\theta) - Cos(\omega_{N-k}\Delta t + \Delta\theta)\}]$$
$$= A_{N-k}[Cos(\omega_{N-k}\Delta t + \Delta\theta) + Sin(\omega_{N-k}\Delta t + \Delta\theta)$$
$$+ j \cdot \alpha \cdot \{Sin(\omega_{N-k}\Delta t + \Delta\theta) - Cos(\omega_{N-k}\Delta t + \Delta\theta)\}]$$

$$\dots \text{(Equation 24)}$$

The insides of brackets " [ ] " of equation 23 and equation 24 are irrelevant of transmission symbols and are fixed coefficients determined on a per k basis (on a per subcarrier basis). Consequently, these fixed coefficients are compensated for by channel estimation on a per subcarrier basis using the pilot symbol (i.e. known symbol), and $A_k$ and $A_{N-k}$ can be obtained as demodulated symbols. A'''$_{N-k}$ subjected to the coordinate conversion at coordinate conversion section 216 is represented by equation 25.
[25]

$$(A_{N-k}^{'''})^{\#} = (Q_k + j \cdot I_k)^{\#} = (I_k + j \cdot Q_k) = A_k \quad \dots \text{(Equation 25)}$$

If A''' is combined with equation 25 at combining section 217, equation 26 can be obtained.
[26]

$$A_k^{'''} + (A_{N-k}^{'''})^{\#} = 2 \cdot A_k \quad \dots \text{(Equation 26)}$$

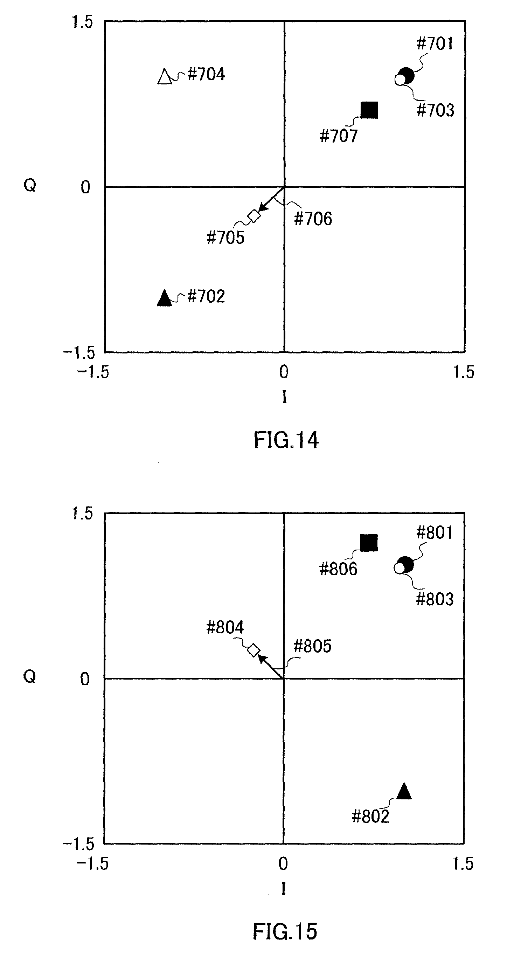

Next, a method of compensating for the delay time difference and quadrature difference will be described using the I-Q plane. FIG.14 and FIG.15 show that interferences occur if there are the delay time difference and quadrature difference between the I-component and the Q-component . If there are the delay time difference and quadrature difference between the I-component and the Q-component, an interference occurs between subcarriers in the relationship of the symmetrical position with respect to the center frequency. As shown in FIG.14, if spreading is not carried out, that is, if general OFDM transmission is carried out, when transmission modulated symbol #701 is received in the case where the I-Q plane coordinate for transmission modulated symbol #701 of subcarrier #k is (1, 1) and the I-Q plane coordinate for symbol #702 of the symmetrical position subcarrier of subcarrier #k, if there is a delay time difference of 2Δt or a quadrature difference of 2Δθ between the I-component and the Q-component, the amplitude becomes smaller by coefficient cos ($\omega_k\Delta t+\Delta\theta$) in the case where amplitude difference $\alpha$=0 in equation 10. As a result, transmission modulated symbol #701 is mapped on received symbol #703 on the receiving side. Further, interference signal #702 interferes received symbol #703. In this case, the interference component becomes vector #706 for signal point #705 which multiplies complex conjugate #704 of interference signal #702 by $j\sin(\omega_k\Delta t+\Delta\theta)$, that is, which multiplies the amplitude by $\sin(\omega_k\Delta t+\Delta\theta)$ and rotates the phase by ninety degrees counterclockwise. Vector #706 is added to received symbol #703 as the interference component, and received symbol #703 becomes received symbol #707.

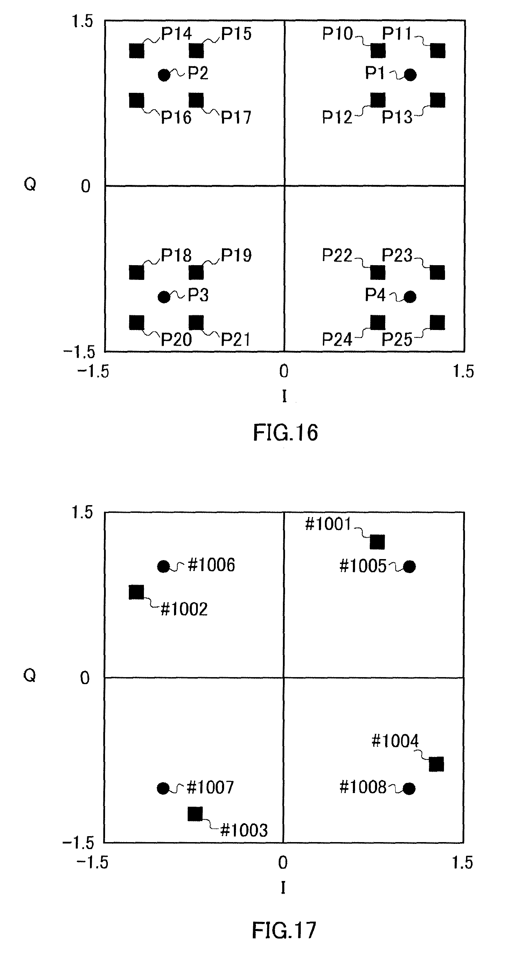

Further, as shown in FIG.17, if spreading is not carried out, that is, if general OFDM transmission is carried out, when transmission modulated symbol #801 is received in the case where the I-Q plane coordinate for transmission modulated symbol #801 of a given subcarrier is (1, 1) and the I-Q plane coordinate for symbol #802 of the subcarrier at a symmetrical position of the given subcarrier, if there is a delay time difference of $2\Delta t$ or a quadrature difference of $2\Delta\theta$ between the I-component and the Q-component, the amplitude becomes smaller by coefficient $\cos(\omega_k\Delta t+\Delta\theta)$. As a result, transmission modulated symbol #801 is mapped on received symbol #803. Further, interference signal #802 interferes received symbol #803. In this case, the interference component becomes vector #805 for signal point #804. Vector #805 is added to received symbol #803 as the interference component, and received symbol #803 becomes received symbol #806. In this way, due to the influence of the interference component, asshown in FIG. 16, constellation mapping points, which originally include four points (P1 to P4) in case of QPSK), include sixteen points (P10 to P25), and performance deteriorates.

Then, with Embodiment 1, a fixed relationship holds between symmetrical subcarriers. For example, a case is assumed where the relationship of the complex conjugate holds between symmetrical subcarriers. That is, if symbol (x, y) of a given subcarrier is at the symmetrical position of (x, -y), as shown in FIG. 17, the received constellation including the interference component of QPSK, includes received symbols #1001 to #1004. In this case, received symbols #1001 to #1004 including interference components are mapped on four points and, although there is phase rotation, there is no distortion. The phase rotation is the fixed value determined according to the degrees of the delay time difference and quadrature difference between the I-component and the Q-component, so that it is possible to compensate for phase rotation by channel estimation using a known symbol . By carrying out channel estimation, received symbols #1001 to #1004 return to received symbols #1005 to #1008. Then, the amplitude doubles by combining the symmetrical subcarriers. Further, although a case has been described with FIG.17 and FIG.15 where a method of compensating for the delay time difference and quadrature difference is described for ease of description, the present invention is not limited to this, and, as described above, it is possible to compensate for the amplitude difference according to the method of Embodiment 1.

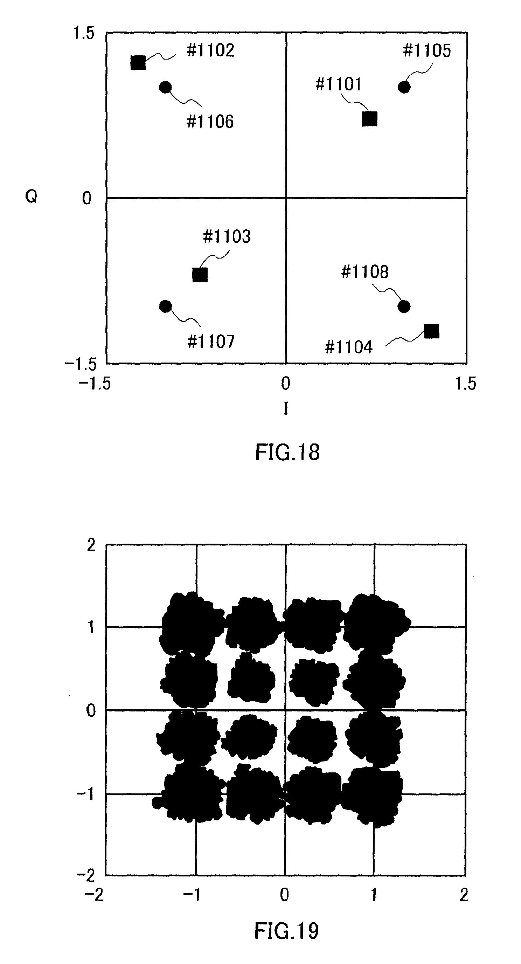

By the way, as shown in FIG.18, when the relationship of inversion holds between subcarriers in the symmetrical position, that is, the symmetrical position symbol is (-x, -y) with respect to symbol (x, y) of a given subcarrier, the received constellation including the interference component includes received symbols #1101 to #1104. In case of QPSK, although received symbols #1101 to #1104 are mapped on four points, received symbols include distortion with respect to constellation mapping points #1105 to # 1108 in the case where there is not distortion. Constellation distortion changes differently depending on transmission data, and so cannot be compensated for by channel estimation, which causes performance deterioration. That is, if, for example, a received symbol of a known signal mapped on constellation mapping point #1101, compensation is carried out to increase the amplitude such that the received symbol is mapped on constellation mapping point #1105 by channel estimation. In this case, receiving constellation mapping point #1102 as data increases the amplitude much more, and constellation distortion cannot be removed. Further, if this distortion is subjected to combining or addition, this distortion does not change. For example, if the transmission modulated symbol of (1, 1) on the I-Q plane coordinate is transmitted, this symbol becomes received symbol #1103 of the subcarrier in the symmetrical position of received symbol #1101. Inversion of received symbol #1103 is equivalent to received symbol #1101, and so, if received symbol #1103 and received symbol #1101 are combined, although the amplitude doubles, the amplitudes of received symbol #1102 and received symbol #1104 double in the same way. Therefore, the amplitude ratio does not change and distortion cannot be removed.

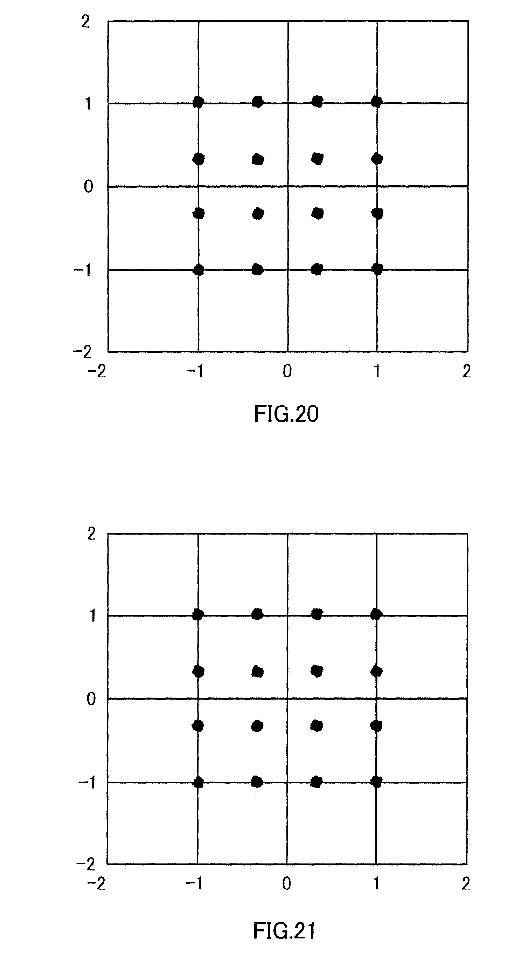

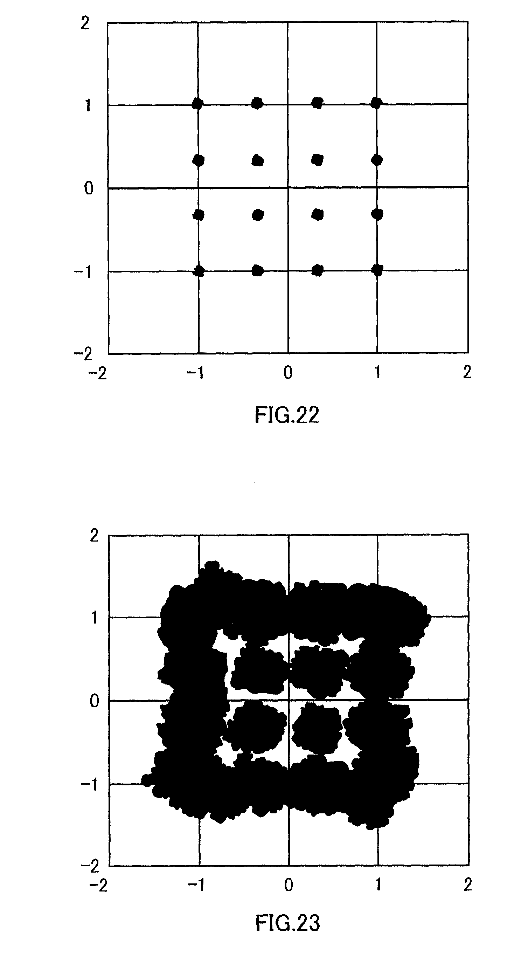

FIG.19 shows a conventional constellation for all subcarriers. FIG.20 shows a constellation for all subcarriers in the case where a coordinate conversion is carried out symmetrically with respect to the Q axis according Embodiment 1. FIG. 21 shows a constellation for all subcarriers in the case where a coordinate conversion is carried out symmetrically with respect to the I axis according to Embodiment 1. FIG.22 shows a constellation for all subcarriers in the case where a coordinate conversion is carried out symmetrically with respect to the symmetry axis which has an inclination of positive forty five degrees with respect to the I axis and which passes the origin according to Embodiment 1. FIG.19 to FIG.22 show constellations in the case where there is no phase noise. In case of FIG.19, the constellation significantly deteriorates due to the delay difference, amplitude difference and quadrature difference between the I-component and the Q-component. On the other hand, in cases of FIG.20 to FIG.22, the constellations do not deteriorate due to the delay difference, amplitude difference and quadrature difference between the I-component and the Q-component.

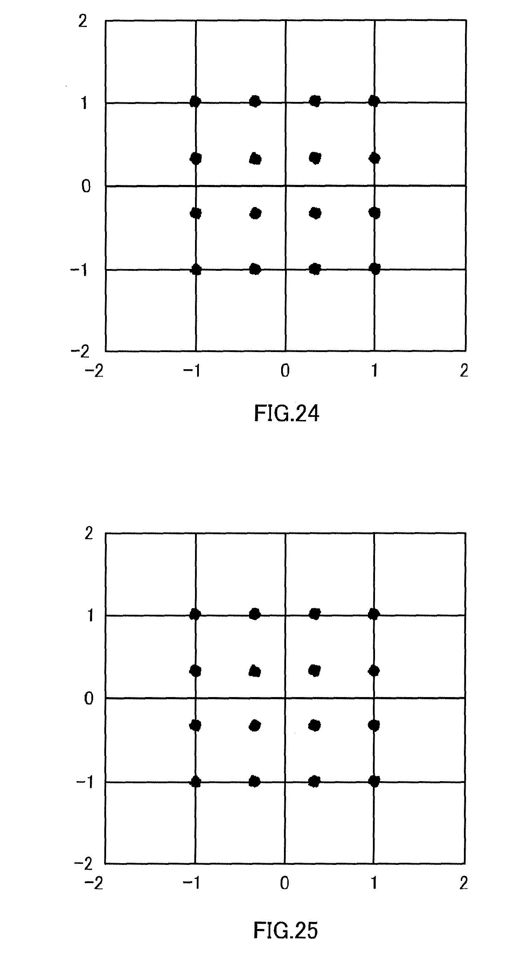

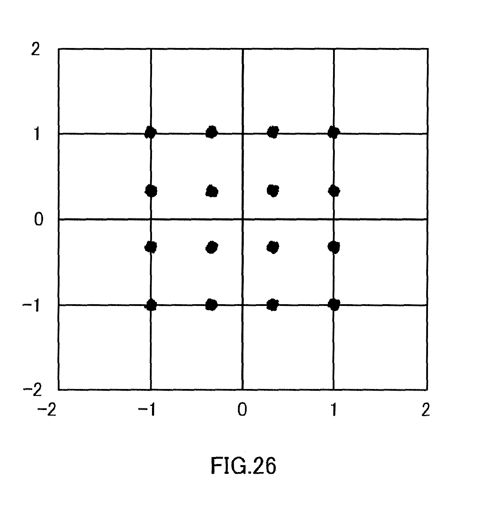

Furhter, the present invention provides an additional effect of reducing the influence of phase noise that occurs accompanying frequency conversion. FIG.23 shows a conventional constellation for all subcarriers in the case where there is phase noise. FIG.24 shows a constellation for all subcarriers in the case where a coordinate conversion is carried out symmetrically with respect to the Q axis according Embodiment 1. FIG.25 shows a constellation for all subcarriers in the case where a coordinate conversion is carried out symmetrically with respect to the I axis according to Embodiment 1. FIG.26 shows a constellation for all subcarriers in the case where a coordinate conversion is carried out symmetrically with respect to the symmetry axis which has an inclination of positive forty five degrees with respect to the I axis and which passes the origin according to Embodiment 1. In case of FIG.23, the constellation deteriorates significantly due to the delay difference, amplitude difference, quadrature difference and phase noise between the I-component and the Q-component. On the other hand, in cases of FIG.24 to FIG.26, the constellations do not deteriorate due to the delay difference, amplitude difference, quadrature difference and phase noise between the I-component and the Q-component. The phase noise accompanying frequency conversion becomes the same phase variation for all subcarriers. Consequently, if a coordinate conversion according to the present invention is carried out upon reception, the phase rotation is converted in the opposite direction, and phase variation is cancelled by combining the phase rotation with a subcarrier in the symmetrical position.

In this way, according to Embodiment 1, a coordinate conversion of symbols is carried out on the I-Q plane symmetrically with respect to a predetermined symmetry axis and symbols before the coordinate conversion are arranged subcarriers that are symmetrical with respect to the center frequency axis, so that it is possible to compensate for the delay time imbalance and amplitude imbalance at a low cost without increasing the circuit scale and compensate for the quadrature difference according to a scheme of carrying out spreading only in the frequency domain or a repetition scheme. Further, according to Embodiment 1, using one of methods of carrying out a coordinate conversion such that the symmetry holds with respect to the I axis, carrying out a coordinate conversion such that the symmetry holds with respect to the Q axis or carrying out a coordinate conversion symmetrically with respect to the symmetry axis which has an inclination of positive forty five degrees with respect to the I axis and which passes the origin, quadrature modulation is unnecessary in the multicarrier transmitting apparatus, so that it is possible to prevent the delay time difference and the amplitude difference between the I-component and the Q-component on the transmitting side.

(Embodiment 2)

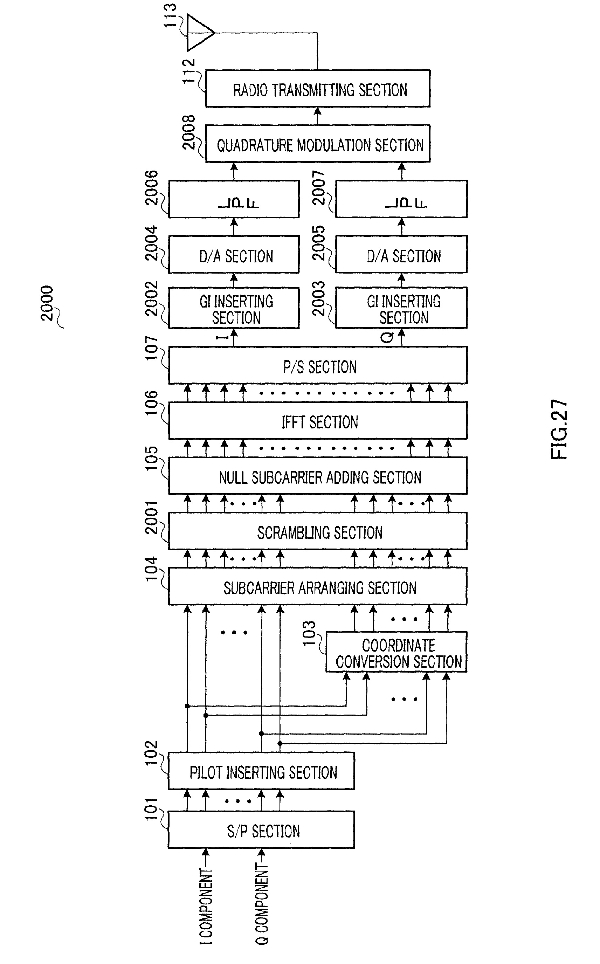

FIG.27 is a block diagram showing a configuration of multicarrier transmitting apparatus 2000 according to Embodiment 2 of the present invention.

As shown in FIG.27, multicarrier transmitting apparatus 2000 according to Embodiment 2 differs from multicarrier transmitting apparatus 100 according to Embodiment 1 shown in FIG. 8 in removing frequency conversion section 111, adding scrambling section 2001 and quadrature modulation section 2008, having GI inserting sections 2002 and 2003 instead of GI inserting section 108, having D/A sections 2004 and 2005 instead of D/A section 109 and having LPF's 2006 and 2007 instead of LPF 110. Further, in Embodiment 2, the same components as in Embodiment 1 will be assigned the same reference numerals and repetition of description will be omitted.

Subcarrier arranging section 104 arranges transmission signals of m sequences inputted from pilot inserting section 102 and transmission signals of m sequences inputted from coordinate conversion section 103, and generates parallel complex signals of two m sequences. To be more specific, subcarrier arranging section 104 generates parallel complex signals of two m sequences such that symbols before a coordinate conversion inputted from pilot inserting section 102 and symbols after a coordinate conversion inputted from coordinate converting section 103, which are in the relationship of the symmetrical coordinate positions with respect to the symmetry axis on the I-Q plane used in the coordinate conversion, are arranged on subcarriers that are symmetrical in the frequency domain with respect to the center frequency of the predetermined communication band. Then, subcarrier arranging section 104 outputs the generated parallel complex signals of two m sequences to scrambling section 2001.

Scrambling section 2001 carries out complex scrambling of parallel complex signals of two m sequences inputted from subcarrier arranging section 104 and outputs the signals to null subcarrier adding section 105. Here, complex scrambling refers to processing of adding phase rotation without changing the amplitude.

Null subcarrier adding section 105 adds null data (zero data) with respect to the parallel complex signals of two m sequences after scrambling inputted from scrambling section 2001, and generates parallel complex signals of N (N>2m) sequences. Then, null subcarrier adding section 105 outputs the generated parallel complex signals of N sequences to IFFT section 106.

GI inserting section 2002 inserts a GI into the time sequence signal of the I-component inputted from P/S section 107 and outputs the signal to D/A section 2004.

GI inserting section 2003 inserts a GI into the time sequence signal of the Q-component inputted from P/S section 107 and outputs the signal to D/A section 2005.

D/A section 2004 converts the time sequence signal of the I-component inputted from GI inserting section 2002 from a digital signal to an analogue signal and outputs the signal to LPF 2006.

D/A section 2005 converts the time sequence signal of the Q-component inputted from GI inserting section 2003 from the digital signal to the analogue signal and outputs the signal to LPF 2007.

LPF 2006 removes the aliasing component that occurs accompanying D/A conversion from the analogue signal inputted from D/A section 2004. Then, LPF 2006 outputs the analogue signal, from which the aliasing component is removed, to quadrature modulating section 2008.

LPF 2007 removes the aliasing component that occurs accompanying D/A conversion from the analogue signal inputted from D/A section 2005. Then, LPF 2007 outputs the analogue signal, from which the aliasing component is removed, to quadrature modulation section 2008.

Quadrature modulation section 2008 up-converts the analogue signals inputted from LPF 2006 and LPF 2007 from the baseband frequency to the IF frequency (i.e. intermediate frequency) and outputs the signal to radio transmitting section 112.

Radio transmitting section 112 up-converts the analogue signal of the IF frequency inputted from quadrature modulation section 2008 from the IF frequency to the radio frequency, amplifies the signal and outputs the signal to antenna 113.

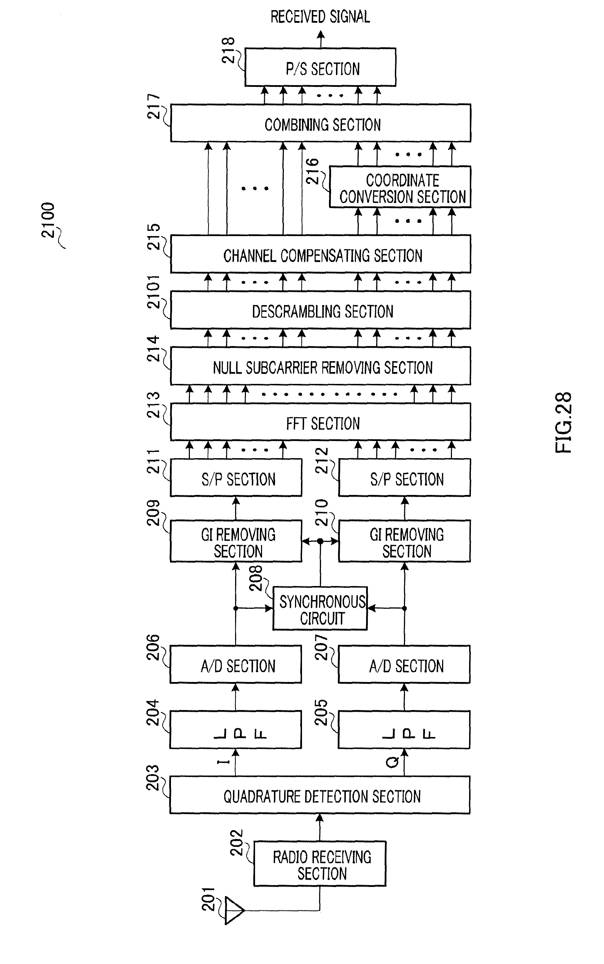

Next, a configuration of multicarrier receiving apparatus 2100 will be described using FIG.28. FIG.28 is a block diagram showing a configuration of multicarrier receiving apparatus 2100.

Null subcarrier removing section 214 removes null subcarrier signals from parallel signals inputted from FFT section 213 and outputs parallel signals of two m sequences of only effective subcarriers to descrambling section 2101.

Descrambling section 2101 descrambles the parallel signals of two m sequences inputted from null subcarrier removing section 214 and outputs the signals to channel compensating section 215. Here, descrambling refers to processing of multiplying the parallel signals of two m sequences by the complex conjugates of descrambling codes used upon scrambling in scrambling section 2001.

Channel compensating section 215 estimates channel characteristics on a per subcarrier basis using known signals for channel estimation included in the descrambled parallel signals inputted from descrambling section 2101 and carries out compensation. Then, out of the compensated parallel signals of two m sequences, channel compensating section 215 outputs parallel signals of m sequences not subjected to the coordinate conversion at multicarrier transmitting apparatus 2000 and outputs parallel signals of m sequences subjected to the coordinate conversion at multicarrier transmitting apparatus 2000, to coordinate conversion section 216. Further, operations of multicarrier transmitting apparatus 2000 and multicarrier receiving apparatus 2100 and the method of compensating for the delay time difference, amplitude difference and quadrature difference are the same as the above Embodiment 1 except that scrambling and descrambling are carried out, and so repetition of description will be omitted. Further, all constellations in Embodiment 2 provide the same result as above Embodiment 1 if the condition is the same, and so repetition of description will be omitted.

In this way, according to Embodiment 2, a coordinate conversion of symbols is carried out on the I-Q plane symmetrically with respect to a predetermined symmetry axis and symbols before and after the coordinate conversion are arranged on subcarriers that are symmetrical with respect to the center frequency, so that it is possible to compensate for the delay time imbalance and amplitude imbalance at a low cost without increasing the circuit scale and compensate for the quadrature difference according to a scheme of carrying out spreading only in the frequency domain or a repetition scheme.

The present application is based on Japanese Patent Application No.2005-332067, filed on November 16, 2005, the entire content of which is expressly incorporated by reference herein.

Industrial Applicability

The multicarrier transmitting apparatus, multicarrier receiving apparatus and communication method according to the present invention are suitable to compensate for the imbalance due to the delay time difference, amplitude difference and quadrature difference between, particularly, the in-phase component (I-component) and the quadrature component (Q-component).

**Claims**

1. A multicarrier transmitting apparatus comprising:

   a coordinate conversion section that carries out a coordinate conversion of symbols on an I-Q plane symmetrically with respect to an I axis;
   an arranging section that generates a transmission signal where the symbols are arranged such that symbols before and after the coordinate conversion, which are in a relationship of symmetrical coordinate positions with respect to the I axis, are arranged on subcarriers that are symmetrical in the frequency domain with respect to a center frequency of a predetermined communication band;
   an inverse fast Fourier transform section that carries out an inverse fast Fourier transform of the transmission signal generated at the arranging section;
a band limiting section that carries out a band limitation of the transmission signal subjected to the inverse fast Fourier transform at the inverse fast Fourier transform section; and
a transmitting section that transmits the transmission signal subjected to the band limitation.

2. A multicarrier transmitting apparatus comprising:

a coordinate conversion section that carries out a coordinate conversion of symbols on an I-Q plane symmetrically with respect to a Q axis;
an arranging section that generates a transmission signal where the symbols are arranged such that symbols before and after the coordinate conversion, which are in a relationship of symmetrical coordinate positions with respect to the Q axis, are arranged on subcarriers that are symmetrical in the frequency domain with respect to a center frequency of a predetermined communication band;
an inverse fast Fourier transform section that carries out an inverse fast Fourier transform of the transmission signal generated at the arranging section;
a band limiting section that carries out a band limitation of the transmission signal subjected to the inverse fast Fourier transform at the inverse fast Fourier transform section; and
a transmitting section that transmits the transmission signal subjected to the band limitation.

3. A multicarrier transmitting apparatus comprising:

a coordinate conversion section that carries out a coordinate conversion of symbols on an I-Q plane symmetrically with respect to a symmetry axis which has an inclination of positive forty five degrees with respect to an I axis and which passes an origin;
an arranging section that generates a transmission signal where the symbols are arranged such that symbols before and after the coordinate conversion, which are in a relationship of symmetrical coordinate positions with respect to the symmetry axis, are arranged on subcarriers that are symmetrical in the frequency domain with respect to a center frequency of a predetermined communication band;
an inverse fast Fourier transform section that carries out an inverse fast Fourier transform of the transmission signal generated at the arranging section;
a band limiting section that carries out a band limitation of the transmission signal subjected to the inverse fast Fourier transformat the inverse fast Fourier transform section; and
a transmitting section that transmits the transmission signal subjected to the band limitation.

4. The multicarrier transmitting apparatus according to claim 1, further comprising a scrambling section that scrambles the transmission signal generated at the arranging section, wherein:

the inverse fast Fourier transform section carries out the inverse fast Fourier transform of the transmission signal scrambled at the scrambling section; and
the band limiting section separately carries out the band limitation of the I component and the Q component of the transmission signal subjected to the inverse fast Fourier transform at the inverse fast Fourier transform section.

5. A multicarrier receiving apparatus comprising:

a receiving section that carries out a coordinate conversion of symbols on an I-Q plane symmetrically with respect to an I axis and receives a received signal where symbols before and after the coordinate conversion, which are in a relationship of symmetrical coordinate positions with respect to the I axis, are arranged on subcarriers that are symmetrical in the frequency domain with respect to the center frequency of a predetermined communication band;
a quadrature detection section that carries out a quadrature detection of the received signal and outputs an I component and a Q component;
a band limiting section that separately carries out a band limitation of the I component and the Q component;
a frequency domain to time domain conversion section that converts the I component and the Q component subjected to the band limitation from the frequency domain to the time domain and outputs the I component and the Q component as received signals of a plurality of sequences;
a coordinate conversion section that converts again the symbols of the received signals of the plurality of sequences outputted from the frequency to time domain converting section and subjected to the coordinate conversion, into a state before the coordinate conversion on the I-Q plane; and
a combining section that combines symbols which are converted again and symbols which are not converted again.

6. A multicarrier receiving apparatus comprising:

a receiving section that carries out a coordinate conversion of symbols on an I-Q plane symmetrically with respect to a Q axis and receives a received signal where symbols before and after the coordinate conversion, which are in a relationship of symmetrical coordinate positions with respect to the Q axis, are arranged on subcarriers that are symmetrical in the frequency domain with respect to the center frequency of a predetermined communication band;
a quadrature detection section that carries out a quadrature detection of the received signal and outputs an I component and a Q component;
a band limiting section that separately carries out a band limitation of the I component and the Q component;
a frequency domain to time domain conversion section that converts the I component and the Q component subj ected to the band limitation, from the frequency domain to the time domain and outputs the I component and the Q component as received signals of a plurality of sequences;
a coordinate conversion section that converts again the symbols of the received signals of the plurality of sequences outputted from the frequency to time domain converting section and subjected to the coordinate conversion, into a state before the coordinate conversion on the I-Q plane; and
a combining section that combines the symbols which are converted again and symbols which are not converted again.

7. A multicarrier receiving apparatus comprising:

a receiving section that carries out a coordinate conversion of symbols on an I-Q plane symmetrically with respect to a symmetry axis which has an inclination of positive forty five degrees with respect to an I axis and which passes an origin, and receives a received signal where symbols before and after the coordinate conversion, which are in a relationship of symmetrical coordinate positions with respect to the symmetry axis, are arranged on subcarriers that are symmetrical in the frequency domain with respect to the center frequency of a predetermined communication band;
a quadrature detection section that carries out a quadrature detection of the received signal and outputs an I component and a Q component;
a band limiting section that separately carries out a band limitation of the I component and the Q component;
a frequency domain to time domain conversion section that converts the I component and the Q component subjected to the band limitation, from the frequency domain to the time domain and outputs the I component and the Q component as received signals of a plurality of sequences;
a coordinate conversion section that converts again the symbols of the received signals of the plurality of sequences outputted from the frequency to time domain converting section and subjected to the coordinate conversion, into a state before the coordinate conversion on the I-Q plane; and
a combining section that combines the symbols which are converted again and symbols which are not converted again.

8. The multicarrier receiving apparatus according to claim 5, further comprising a descrambling section that descrambles the received signals of the plurality of sequences outputted from the frequency domain to time domain conversion section,
wherein the coordinate conversion section converts again the symbols of the descrambled received signals of the plurality of sequences.

9. A communication method comprising:

carrying out a coordinate conversion of symbols on an I-Q plane symmetrically with respect to an I axis;
generating a transmission signal where the symbols are arranged such that symbols before and after the coordinate conversion, which are in a relationship of symmetrical coordinate positions with respect to an I axis, are arranged on subcarriers that are symmetrical in the frequency domain with respect to a center frequency of a predetermined communication band;
carrying out an inverse fast Fourier transform of the generated transmission signal;
carrying out a band limitation of the transmission signal subjected to the inverse fast Fourier transform;

at a multicarrier transmitting apparatus, transmitting the transmission signal subjected to the band limitation;
at a multicarrier receiving apparatus, receiving the transmission signal transmitted from the multicarrier transmitting apparatus;
carrying out a quadrature detection of the received signal and outputting an I component and a Q component;
carrying out separately a band limitation of the I component and the Q component;
converting the I component and the Q component subjected to the band limitation, from the frequency domain to the time domain and outputting the I component and the Q component as received signals of a plurality of sequences;
converting again the symbols of the received signals of the plurality of sequences outputted and subjected to the coordinate conversion, into a state before the coordinate conversion on the I-Q plane; and
combining the symbols which are converted again and symbols which are not converted again.

**10.** A communication method comprising:

carrying out a coordinate conversion of symbols on an I-Q plane symmetrically with respect to a Q axis;
generating a transmission signal where the symbols are arranged such that symbols before and after the coordinate conversion, which are in a relationship of symmetrical coordinate positions with respect to the Q axis, are arranged on subcarriers that are symmetrical in the frequency domain with respect to a center frequency of a predetermined communication band;
carrying out an inverse fast Fourier transform of the generated transmission signal;
carrying out a band limitation of the transmission signal subjected to the inverse fast Fourier transform;
at a multicarrier transmitting apparatus, transmitting the transmission signal subjected to a band limitation;
at a multicarrier receiving apparatus, receiving the transmission signal transmitted from the multicarrier transmitting apparatus;
carrying out a quadrature detection of the received signal and outputting an I component and a Q component;
carrying out separately a band limitation of the I component and the Q component;
converting the I component and the Q component subjected to the band limitation, from the frequency domain to the time domain and outputting the I component and the Q component as received signals of a plurality of sequences;
converting again the symbols of the received signals of the plurality of sequences outputted and subjected to the coordinate conversion, into a state before the coordinate conversion on the I-Q plane; and
combining the symbols which are converted again and symbols which are not converted again.

**11.** A communication method comprising:

carrying out a coordinate conversion of symbols on an I-Q plane symmetrically with respect to a symmetry axis which has an inclination of positive forty five degrees with respect to an I axis and which passes an origin;
generating a transmission signal where the symbols are arranged such that symbols before and after the coordinate conversion, which are in a relationship of symmetrical coordinate positions with respect to the symmetry axis, are arranged on subcarriers that are symmetrical in the frequency domain with respect to a center frequency of a predetermined communication band;
carrying out an inverse fast Fourier transform of the generated transmission signal;
carrying out a band limitation of the transmission signal subjected to the inverse fast Fourier transform;
at a multicarrier transmitting apparatus, transmitting the transmission signal subjected to the band limitation;
at a multicarrier receiving apparatus, receiving the transmission signal transmitted from the multicarrier transmitting apparatus;
carrying out a quadrature detection of the received signal and outputting an I component and a Q component;
carrying out separately the band limitation of the I component and the Q component;
converting the I component and the Q component subjected to the band limitation, from the frequency domain to the time domain and outputting the I component and the Q component as received signals of a plurality of sequences;
converting again the symbols of the received signals of the plurality of sequence outputted and subjected to the coordinate conversion, into a state before the coordinate conversion on the I-Q plane; and
combining the symbols which are converted again and symbols which are not converted again.

FIG.1

FIG.2

FIG.3

FIG.4

FIG.5

FIG.6

FIG.7

FIG.8

EP 1 940 064 A1

FIG.9

FIG.10

FIG.11

FIG.12

FIG.13

FIG.14

FIG.15

FIG.16

FIG.17

FIG.18

FIG.19

FIG.20

FIG.21

FIG.22

FIG.23

FIG.24

FIG.25

FIG.26

FIG.27

EP 1 940 064 A1

RECEIVED SIGNAL

2100

FIG.28

| 218 | P/S SECTION |
| 217 | COMBINING SECTION |
| 216 | COORDINATE CONVERSION SECTION |
| 215 | CHANNEL COMPENSATING SECTION |
| 2101 | DESCRAMBLING SECTION |
| 214 | NULL SUBCARRIER REMOVING SECTION |
| 213 | FFT SECTION |
| 211 | S/P SECTION |
| 212 | S/P SECTION |
| 209 | GI REMOVING SECTION |
| 210 | |
| | GI REMOVING SECTION |
| 208 | SYNCHRONOUS CIRCUIT |
| 206 | A/D SECTION |
| 207 | A/D SECTION |
| 204 | LPF |
| 205 | LPF |
| | I | Q |
| 203 | QUADRATURE DETECTION SECTION |
| 202 | RADIO RECEIVING SECTION |
| 201 | |

<div style="text-align: center;">

**INTERNATIONAL SEARCH REPORT**

</div>

| | International application No. |
|---|---|
| | PCT/JP2006/322775 |

**A. CLASSIFICATION OF SUBJECT MATTER**
*H04J11/00*(2006.01)i

According to International Patent Classification (IPC) or to both national classification and IPC

**B. FIELDS SEARCHED**

Minimum documentation searched (classification system followed by classification symbols)
H04J11/00

Documentation searched other than minimum documentation to the extent that such documents are included in the fields searched
Jitsuyo Shinan Koho      1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2001-060935 A  (Victor Company Of Japan, Ltd.),<br>06 March, 2001 (06.03.01),<br>Par. No. [0019]<br>(Family: none) | 1,2,5,6,9,10<br>3,4,7,8,11 |
| X<br>A | JP 2003-110525 A  (Matsushita Electric Industrial Co., Ltd.),<br>11 April, 2003 (11.04.03),<br>Par. No. [0004], [0037], [0101]; Figs. 3, 5, 16, 18<br>& WO 2003/030423 A1      & US 2004/0114671 A1<br>& JP 3548148 B2         & EP 1447931 A1<br>& AU 2002332254 A1      & CN 1505878 A | 3,7,11<br>1,2,4-6,8-10 |

☐  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 February, 2007 (06.02.07) | 13 February, 2007 (13.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

<div style="text-align: center;">40</div>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001024722 A
- JP 2005332067 A